Europäisches Patentamt

European Patent Office

Office européen des brevets

(11) Publication number: **0 385 252 B1**

# EUROPEAN PATENT SPECIFICATION

(45) Date of publication of patent specification: **26.04.95** (51) Int. Cl.⁶: **B60L 7/28**, B60L 15/20

(21) Application number: **90103332.4**

(22) Date of filing: **21.02.90**

Divisional application 93119363.5 filed on 21/02/90.

(54) **Apparatus for controlling an electric motor car.**

(30) Priority: **28.02.89 JP 47347/89**
**28.02.89 JP 47348/89**

(43) Date of publication of application:
**05.09.90 Bulletin 90/36**

(45) Publication of the grant of the patent:
**26.04.95 Bulletin 95/17**

(84) Designated Contracting States:
**DE FR GB NL**

(56) References cited:
**US-A- 2 525 507**
**US-A- 4 090 117**

**PATENT ABSTRACTS OF JAPAN, vol. 8, no. 209, (E-268)[1646], 22nd September 1984; & JP-A-59 92 784**

**PATENT ABSTRACTS OF JAPAN, vol. 4, no. 179, (M-46)[661], 11th December 1980; & JP-A-55 127 804**

**PATENT ABSTRACTS OF JAPAN, vol. 10, no. 304 (M-526)[2360], 16th October 1986; & JP-A-61 116 909**

(73) Proprietor: **SUZUKI MOTOR CORPORATION**
**300, Takatsuka-cho**
**Hamamatsu-shi**
**Shizuoka-ken (JP)**

(72) Inventor: **Suzuki, Hiroyasu**
**1299-24, Tomituka-cho**
**Hamamatsu-shi,**
**Shizuoka-ken (JP)**

(74) Representative: **Klingseisen, Franz, Dipl.-Ing. et al**
**Patentanwälte,**
**Dr. F. Zumstein,**
**Dipl.-Ing. F. Klingseisen,**
**Bräuhausstrasse 4**
**D-80331 München (DE)**

## Description

The invention relates to an apparatus for controlling an electric motor car according to the preamble of the claim.

JP-A-59 92 784 discloses a thrust load brake controller in which the reference frequency of the thrust load brake controller is switched in response to the compared result of the speed of a wound-rotor type induction motor with synchronising speed to suppress the production of an abrupt brake torque at the initial time of deceleration.

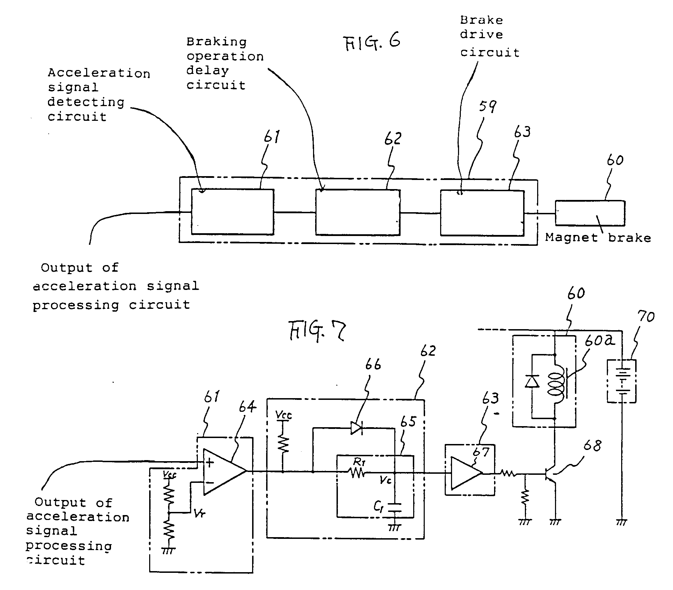

A conventional example of an apparatus for controlling an electric motor car which is the basis for the preamble of the claim, is shown in Fig. 5 to 7. Among them, Fig. 5 shows a whole construction of a general electric motor car, Fig. 6 shows a brake control section in the construction of Fig. 5, and Fig. 7 shows an example of a practical construction of the brake control section.

The conventional example shown in Fig. 5 comprises: an accelerator 51 as a control terminal; an acceleration signal processing circuit 52 for processing an output signal of a variable resistor (not shown) attached to the accelerator 51 and generating an acceleration signal; a rotational speed control circuit 53 provided at an output stage of the acceleration signal processing circuit 52; a pulse width modulating circuit (hereinafter, referred to as a "PWM circuit") 54 provided at an output stage of the rotational speed control circuit 53; and a motor drive circuit 55 to generate a drive current to a drive motor 56 at the next stage in accordance with an output signal of the PWM circuit 54. On the other hand, the drive motor 56 is provided with motor rotational speed detecting means 57. A rotational speed of the drive motor 56 is detected and the result is fed back to the rotational speed control circuit 53. Therefore, the rotational speed control circuit 53 outputs a control signal to the PWM circuit 54 so as to make the drive motor follow the acceleration signal. The PWM circuit 54 is provided with a PWM oscillator 58 to generate a reference triangular wave (or saw-tooth wave) for what is called a chopping control. The PWM circuit 54 executes chopping control by a reference triangular wave to an output signal of the rotational speed control circuit 53 and outputs a drive control signal.

On the other hand, a brake control section 59 to generate a control signal to a magnet brake 60 (which will be explained hereinlater) in accordance with the acceleration signal is provided at an output stage of the acceleration signal processing circuit 52.

Practically speaking, as shown in Fig. 6, the brake control section 59 comprises: an acceleration signal detecting circuit 61 for detecting the on/off of the acceleration signal which is output from the acceleration signal processing circuit 52 and outputting a brake-on control signal or a brake-off control signal; a braking operation delay circuit 62 which is provided at an output stage of the acceleration signal detecting circuit 61 and delays only the brake-on control signal by a predetermined time; and a brake drive circuit 63 which is provided at an output stage of the braking operation delay circuit 62 and makes a brake operative or inoperative on the basis of the brake-on/off control signals.

Detailed explanation will be further made. The brake control section 59 executes a brake control in the case of using the magnet brake 60 of the non-exciting operating type, in which a fail safe is realized so as to turn off the brake only in the current supplying state and to always turn on the brake in the non-current supplying state in order to control an electric motor car.

The acceleration signal detecting circuit 61 has a comparator 64 for comparing the level of the acceleration signal with a predetermined threshold value $V_r$ and generating an output. On the other hand, the braking operation delay circuit 62 comprises: an integrating circuit 65 which is constructed by a resistor $R_1$ and a capacitor $C_1$; and a diode 66. The brake drive circuit 63 has a buffer 67 by waveform shaping an output of the braking operation delay circuit 62 and outputting to a transistor 68 for a current supply control of a brake coil 60a of the magnet brake 60.

In this case, when the level of the acceleration signal is higher than $V_r$, an output of the comparator 64 is set to the "high (H)" level. Since a voltage in the forward direction is applied to the diode 66, the capacitor $C_1$ is promptly charged by bypassing the resistor $R_1$. $V_c$ is set to the level to turn off the brake drive circuit 63. In other words, the input level of the buffer 67 is set to the "high (H)" level. Therefore, the output of the buffer 67 is set to the "H" level. A transistor 68 is made conductive. The brake coil 60a is excited by a current from a battery 70. The magnet brake 60 is turned off.

On the other hand, when the level of the acceleration signal is lower than $V_r$, the output of the comparator 64 is set to the low (L) level and the charges stored in the capacitor $C_1$ are discharged through the resistor $R_1$ and $V_c$ gradually decreases. Therefore, after the elapse of a predetermined time, the input level of the buffer 67 is set to the "L" level. The output of the buffer 67 is set to the "L" level. The brake coil 60a is not energized. The magnet brake 60 is turned on. In this manner, simultaneously with the turn-on of the accelerator, the brake is turned on after the elapse of a predetermined time from the brake-off and accelerator-off.

However, in the conventional example, since the delay time from the accelerator-off to the brake-on is determined by the capacitance of the capacitor $C_1$ and the resistance value of the resistor $R_1$, it is always constant. Therefore, there occurs an inconvenience such that by setting so as to smoothly stop from a certain predetermined speed, a stop shock increases when it is faster than that speed, and if it is contrarily slower than that speed, the braking operation is likely to be executed with a delay time and the braking distance increases.

It is an object of the invention to improve the inconveniences of such a conventional example and to provide an apparatus for braking an electric motor car in which the motor car can be smoothly stopped without being largely influenced by a speed.

This object is achieved by the features in the characterizing part of the claim.

The invention is described in more detail in connection with the drawings.

Fig. 1 is a block constructional view showing the main section in an embodiment of the invention,

Fig. 2 is a circuit diagram showing a practical construction of the embodiment of Fig. 1,

Fig. 3 is a diagram showing inputs and an output of a comparator 2 in Fig. 2,

Fig. 4 is a diagram showing an equivalent circuit for explaining the operation of Fig. 2,

Fig. 5 is a block diagram showing a whole construction of a general electric motor car,

Fig. 6 is a block diagram showing a construction of a brake control section in Fig. 5, and

Fig. 7 is a circuit diagram showing an example of a practical construction of the brake control section,

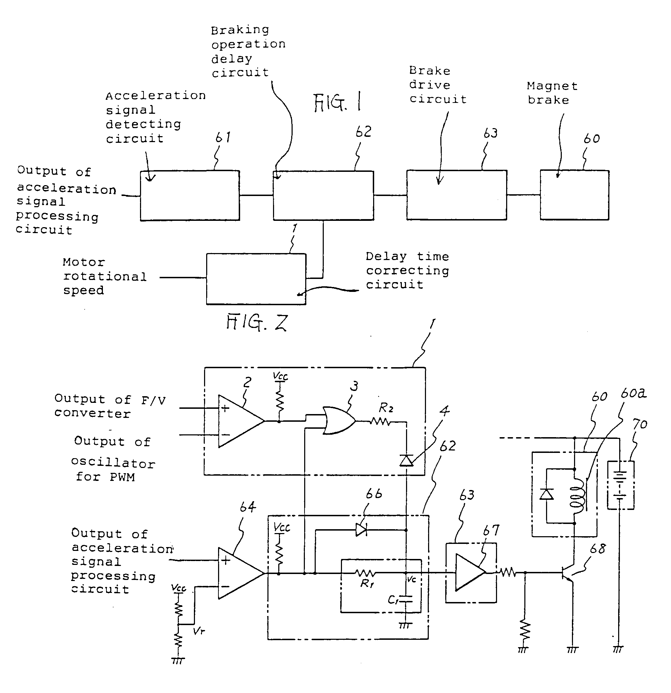

An embodiment of the invention will now be described hereinbelow on the basis of Figs. 1 to 4.

The components and elements similar to those in the foregoing conventional example are designated by the same reference numerals and their descriptions are simplified or omitted.

The embodiment shown in Fig. 1 comprises: the acceleration signal detecting circuit 61 for detecting the on/off of an acceleration signal which is output from the acceleration signal processing circuit 52 and outputting a brake-on control signal or a brake-off control signal; a braking operation delay circuit 62 which is provided at an output stage of the acceleration signal detecting circuit 61 and delays only the brake-on control signal by a predetermined time; and a brake drive circuit 63 as a brake driving circuit which is provided at an output stage of the braking operation delay circuit 62 and makes the brake operative or inoperative on the basis of the brake-on/off control signals. The braking operation delay circuit 62 is provided with a delay time correcting circuit 1 for variably setting the delay time of the braking operation delay circuit 62 in accordance with the rotational speed of the drive motor 56 for the electric motor car.

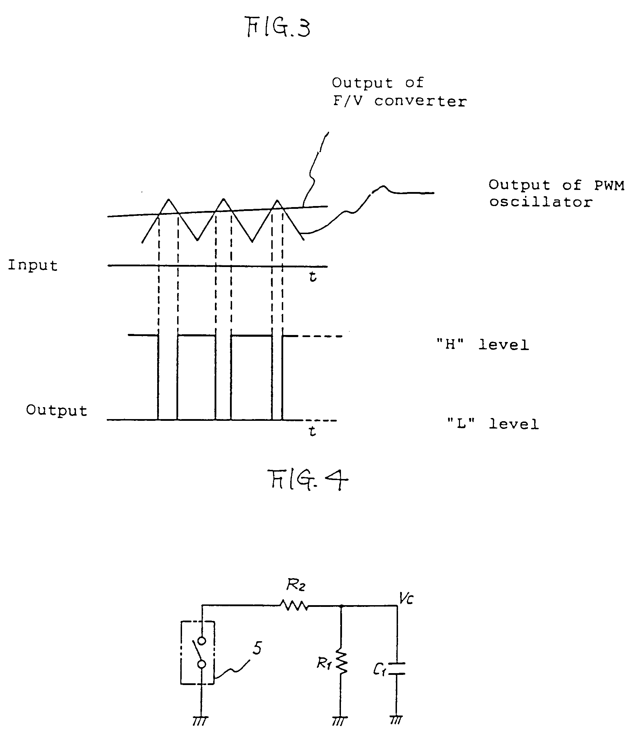

The delay time correcting circuit 1 comprises: a comparator 2 for comparing an F/V converter output which is proportional to the rotational speed of the drive motor 56 with an output of the oscillator 58 for PWM and outputting a square wave having a duty corresponding to the motor rotational speed as shown in Fig. 3; an OR circuit 3 for outputting the OR of an output of the comparator 2 and an output of the comparator 64 to compare the acceleration signal and the predetermined threshold value $V_r$; a resistor $R_2$ connected to an output terminal of the OR circuit 3; and a diode 4 whose cathode side is connected to the resistor $R_2$ and whose anode side is connected to the cathode side of the diode 66 mentioned above.

The other construction is similar to that in the foregoing conventional example.

The function and operation of the embodiment will now be described.

When the driver of the motor car operates the accelerator and the level of the acceleration signal becomes higher than $V_r$, the output of the comparator 64 is set to the "high (H)" level. Since a voltage in the forward direction is applied to the diode 66, the capacitor $C_1$ is promptly charged by bypassing the resistor $R_1$. $V_c$ is set to such a level as to turn on the brake drive circuit 63. In other words, the input level of the buffer 67 is set to the "H" level. Therefore, an output of the buffer 67 is set to the "H" level, the transistor 68 is made conductive, the brake coil 60a is energized, and the magnet brake 60 is turned off. At this time, since the output of the OR circuit 3 is always at the "H" level, the diode 4 is reversed and the delay time correcting circuit 1 does not exert any influence on the braking operation delay circuit 62.

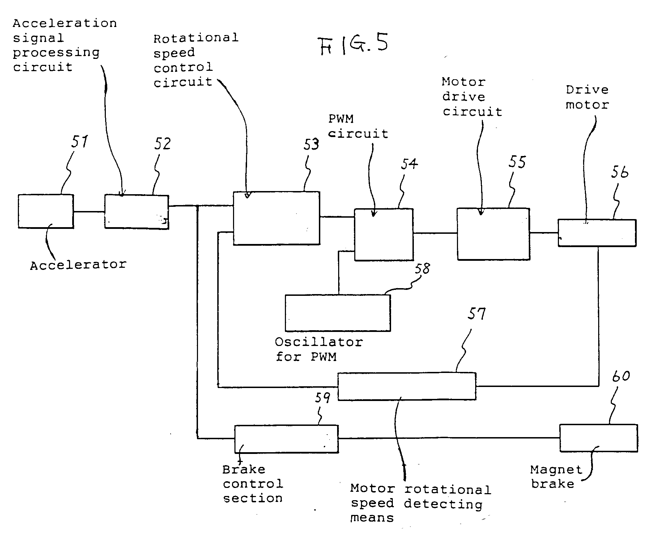

On the other hand, when the level of the acceleration signal becomes lower than $V_r$, the output of the comparator 64 is set to the "L" level and the charges stored in the capacitor $C_1$ are discharged through the resistor $R_1$ and $V_c$ gradually decreases. However, at this time, the OR circuit 3 generates the output of the comparator 2 as it is. The output of the comparator 2 is shown in Fig. 3. When the output of the comparator 2, that is, the output of the OR circuit 3 is at the "H" level, the diode 4 is reversed and no influence is exerted on the discharge of the capacitor $C_1$. However, when it is at the "L" level, the charges in the capacitor $C_1$ are discharged through the resistor $R_2$. Fig. 4 shows an equivalent circuit in this case. In Fig. 4, a switch 5 closes the contact when the output of the comparator 2, i.e., the output of the OR circuit 3 is set to the "L" level. The contact is opened when it is set to the "H" level. As will be also obvious when considering Fig. 4, in the embodiment, as the time when the output of the comparator 2 is at the "L" level is long, that is, when the rotational speed of the drive motor 56 is low, the charges in the capacitor $C_1$ are rapidly discharged and $V_c$ soon decreases. Thus, the delay time changes in a range from a time constant $R_1 C_1$ to $R_1 R_2/(R_1 + R_2) \cdot C_1$ in accordance with the motor rotational speed. After the elapse of the delay time which is determined in accordance with the motor rotational speed, the input level of the buffer 67 is set to the "L" level, the output of the buffer 67 is set to the "L" level, the brake coil 60a is not energized, and the magnet brake 60 is turned on.

As described above, according to the embodiment, as the rotational speed of the drive motor 56 is low, the magnet brake 60 is rapidly turned on. As the rotational speed is high, the magnet brake 60 is slowly turned on, in other words, there is an advantage such that since the time from the turn-off of the accelerator to the turn-on of the brake continuously changes in accordance with the rotational speed of the motor, that is, the velocity, it is possible to smoothly stop without being largely influenced by the velocity. On the other hand, even when the power generation brake fails or the motor is not decelerated after the turn-off of the accelerator in the case of a down slope or the like, the magnet brake 60 is turned on after the elapse of the longest delay time which is determined by the time constant $R_1 C_1$.

Since the invention has been constructed and functions as mentioned above, it is possible to provide an excellent apparatus for braking an electric motor car which could not be obtained hitherto, in which the delay time of the braking operation delay circuit can be variably set in accordance with the rotational speed of the drive motor by the function of the delay time correcting circuit provided for the braking operation delay circuit, so that as in the above embodiment, as the rotational speed of the drive motor is low, the brake is rapidly turned on, while as the rotational speed is high, the brake is slowly turned on, and therefore, the time from the turn-off of the accelerator to the turn-on of the brake can be continuously changed in accordance with the velocity, and the motor car can be smoothly stopped without being largely influenced by the velocity.

## Claims

1. An apparatus for controlling an electric motor car comprising:

   an acceleration signal detecting circuit (61) for detecting on/off of an acceleration signal from a control terminal and outputting a brake-on control signal or a brake-off control signal; and a brake drive circuit (63) for making a brake operative or inoperative on the basis of the brake-on/off control signals,

   in which a braking operation delay circuit (62) for delaying only the brake-on control signal by a predetermined time is provided between both of said circuits,

   wherein said apparatus is characterized in that the braking operation delay circuit (62) is provided with a delay time correcting circuit (1) for variably setting a delay time of the braking operation delay circuit (62) in accordance with a rotational speed of a drive motor (56) of the electric motor car.

## Patentansprüche

1. Vorrichtung zur Regelung eines elektrischen Fahrzeugs mit:
   einer Beschleunigungssignal-Erfassungsschaltung (61) zum Erfassen eines Ein-/Auszustandes eines Beschleunigungssignals von einem Regelungsanschluß und zum Ausgeben eines Bremsen-Ein-Regelungssignals oder eines Bremsen-Aus-Regelungssignals; und einer Brems-Antriebsschaltung (63), die auf der Basis der Bremsen-Ein-/Aus-Regelungssignale veranlaßt, daß eine Bremse in Betrieb ist oder nicht in Betrieb ist,
   wobei eine Bremsoperations-Verzögerungsschaltung (62) zum Verzögern nur des Bremsen-Ein-Regelungssignals um eine vorbestimmte Zeit zwischen den beiden Schaltungen vorgesehen ist,
   wobei die Vorrichtung **dadurch gekennzeichnet** ist, daß die Bremsoperations-Verzogerungsschaltung (62) mit einer Verzögerungszeit-Korrekturschaltung (1) zum variablen Einstellen einer Verzögerungszeit der Bremsoperations-Verzögerungsschaltung (62) in Übereinstimmung mit einer Drehgeschwindigkeit eines Antriebsmotors (56) des elektrischen Fahrzeugs versehen ist.

## Revendications

1. Un dispositif pour commander une voiture électrique comprenant :
   un circuit de détection de signal d'accélération (61) pour détecter l'activation/désactivation d'un signal d'accélération provenant d'un moyen de commande, et pour émettre un signal de commande d'application de frein ou un signal de commande de relâchement de frein; et un circuit d'attaque de frein (63) pour mettre un frein en fonction ou hors fonction sur la base des signaux de commande d'application/relâchement de frein,

dans lequel un circuit de retard d'opération de freinage (62) destiné a retarder seulement d'une durée prédéterminée le signal de commande d'application de frein, est incorporé entre les deux circuits précités,

ce dispositif étant caractérisé en ce que le circuit de retard d'opération de freinage (62) comporte un circuit de correction de durée de retard (1) qui est destiné à fixer de façon variable une durée de retard du circuit de retard d'opération de freinage (62) conformément à une vitesse de rotation d'un moteur d'entraînement (56) de la voiture électrique.

FIG. 1

FIG. 2

FIG.3

Output of
F/V converter

Output of PWM
oscillator

Input

$t$

"H" level

Output

$t$

"L" level

FIG. 4

$R_2$

$V_C$

5

$R_1$

$C_1$

FIG.5

Acceleration
signal
processing
circuit

Rotational
speed
control
circuit

PWM
circuit

Motor
drive
circuit

Drive
motor

51

52

53

54

55

56

Accelerator

58

57

Oscillator
for PWM

60

59

Brake
control
section

Motor rotational
speed detecting
means

Magnet
brake

FIG. 6

Acceleration signal detecting circuit

Braking operation delay circuit

Brake drive circuit

61 62 59 63 60

Magnet brake

Output of acceleration signal processing circuit

FIG. 7

60

70

66 62

60a

61 64

$V_{CC}$

65

63

67

68

Output of acceleration signal processing circuit

$V_{CC}$

$V_r$

$R_1$

$V_c$

$C_1$